# EUROPEAN PATENT APPLICATION

(11) **EP 1 876 752 A2**
(43) Date of publication of application: **09.01.2008**
(21) Application number: 07075472.6
(22) Date of filing: 28.10.2004
(51) Int. Cl.: H04L 9/08

(54) **A secure cryptographic communication system using kem-dem**

(30) Priority: 29.10.2003 GB 0325225; 23.01.2004 GB 0401470
(62) Divisional of application: 04790994.0
(71) Applicant: Argelcom Limited, Temple Quay, Bristol BS1 6EG (GB)
(72) Inventor: Smart, Nigel Paul, Bristol BS35 21EG (GB)
(74) Representative: Beresford, Keith Denis Lewis

(57) **Abstract**

A secure communication system comprising: a communications network; at a sending location on said network: (i) an encapsulator (1) for providing (a) a session key (K), and (b) plurality of asymmetric encryptions of the session key (E1(K), E2(K), E3(K) ... Ei(K) ... En(K)), each said encryption corresponding to a respective receiving location (1 to n) on said network; and (ii) a symmetric encryptor (3) for utilising said session key (K) to encrypt a message (M); and, at each said receiving location (1 to n) on said network: (i) a decapsulator (5) for decrypting the encryption of said plurality of encryptions (E1(K), E2(K), E3 (K) ... Ei(K) ... En(K)) which corresponds to that receiving location (1 to n) to provide said session key (K); and (ii) a symmetric decryptor (7) for utilising the session key (K) to decrypt the message (M), said encapsulator (1) comprising: a pseudo random number generator (51 or 91); symmetric key derivation means (55 or 95) for deriving said session key (K) from a first random number (N) generated by said pseudo random number generator (51 or 91); means (53 or 93) for utilising said first random number (N) to generate a second random number (r); and means (57-0 to 57-n and 59-1 to 59-n, or 97-1 to 97-n and 99-1 to 99-(n-1) and 101-(-1) to 101-(n-1) and 103 and 105 and 107) for utilising the first keys (pk1 to pkn, or id1 to idn) of asymmetric encryption key pairs (pk1 to pkn and sk1 to skn, or id1 to idn and S1 to Sn) of the intended recipients at the receiving locations (1 to n) together with said second random number (r) and said first random number N to generate said plurality of asymmetric encryptions of the session key (E1(K), E2(K), E3 (K) ... Ei(K) ... En(K)), said decapsulator (5) at each receiving location (1 to n) comprising: means (71, 73, 75, or 111, 113, 115 or 131, 133, 135, 137, 139, 141) for utilising the second key (ski or Si) of the asymmetric encryption key pair (pki and ski, or idi and Si) of the recipient at the receiving location together with the asymmetric encryption (Ei(K)) corresponding to the receiving location to recover said first random number (N); and a further symmetric key derivation means (77, or 117 or 143) for deriving said session key (K) from said first random number (N).

## Description

This invention relates to a secure communication system.

More particularly, the invention relates to a secure communication system which enables a user of the system to send securely a message (the same message) to each of a plurality of other users of the system.

One known secure communication scheme is public key cryptography. Public key cryptography has traditionally been concerned with two parties communicating. Party A wishes to send data securely to party B. Party A encrypts the data with party B's public key. Party B decrypts the data using its private key (corresponding to its public key as used by party A).

Public key algorithms are very slow. Accordingly, if party A wishes to send a large amount of data to party B, party A first encrypts a symmetric session key with party B's public key, and transmits this to party B. Party A then encrypts the large amount of data using the fast symmetric cipher keyed by the session key. Such a combination of public key and symmetric techniques is termed a hybrid encryption algorithm.

In recent years, the hybrid approach has been developed by use of the so called KEM-DEM philosophy. A key encapsulation mechanism (KEM) utilises party B's public key pkB to provide both a symmetric session key K, and an encryption of K under pkB. This encryption will be denoted EB(K). A symmetric data encapsulation mechanism (DEM) then uses K to symmetrically encrypt the data (message) to be transmitted. This encryption will be denoted SEK(M). Party A transmits to party B both EB(K) and SEK(M). Party B recovers K from EB(K) using party B's private key skB, and then uses K to recover M from SEK(M).

The use of the KEM-DEM philosophy allows the different components of a hybrid encryption scheme to be designed in isolation, leading to simpler analysis and potentially more efficient schemes. However, problems occur when one departs from the traditional two-party setting. Party A may wish to send a large amount of data to two parties B and C. For example, party A may wish to encrypt an email to parties B and C, or encrypt a file on party A's computer to parties B and C. In this case, the KEM would: (i) utilise party B's public key pkB to provide both a symmetric session key KB, and an encryption of KB under pkB; and (ii) utilise party C's public key pkC to provide both a further symmetric session key KC, and an encryption of KC under pkC. The DEM would then: (i) use KB to symmetrically encrypt the large amount of data for party B; and (ii) use KC to symmetrically encrypt the large amount of data for party C. It will be seen that the data has been encrypted twice. This is clearly inefficient, particularly where the amount of data is large.

According to a first aspect of the present invention there is provided a secure communication system comprising: a communications network; at a sending location on said network: (i) an encapsulator for providing (a) a session key, and (b) a plurality of asymmetric encryptions of the session key, each said encryption corresponding to a respective receiving location on said network; and (ii) a symmetric encryptor for utilising said session key to encrypt a message; and, at each said receiving location on said network: (i) a decapsulator for decrypting the encryption of said plurality of encryptions which corresponds to that receiving location to provide said session key; and (ii) a symmetric decryptor for utilising the session key to decrypt the message, said encapsulator comprising: a pseudo random number generator; symmetric key derivation means for deriving said session key from a first random number generated by said pseudo random number generator; means for utilising said first random number to generate a second random number; and means for utilising the first keys of asymmetric encryption key pairs of the intended recipients at the receiving locations together with said second random number and said first random number to generate said plurality of asymmetric encryptions of the session key, said decapsulator at each receiving location comprising: means for utilising the second key of the asymmetric encryption key pair of the recipient at the receiving location together with the asymmetric encryption corresponding to the receiving location to recover said first random number; and a further symmetric key derivation means for deriving said session key from said first random number.

According to a second aspect of the present invention there is provided a secure communication system comprising: a communications network; at a sending location on said network an encryptor for providing a plurality of asymmetric encryptions of a message, each said encryption corresponding to a respective receiving location on said network, said encryptor comprising: means for deriving from said message a first random number; and means for utilising the first keys of asymmetric encryption key pairs of the intended recipients at the receiving locations together with said first random number and said message to generate said plurality of asymmetric encryptions of the message; and, at each said receiving location on said network a decryptor for decrypting the encryption of said plurality of encryptions which corresponds to that receiving location to provide said message, said decryptor comprising means for utilising the second key of the asymmetric encryption key pair of the recipient at the receiving location together with the asymmetric encryption corresponding to the receiving location to recover the message.

According to a third aspect of the present invention there is provided a secure communication method comprising: at a sending location on a communications network: (i) providing (a) a session key, and (b) a plurality of asymmetric encryptions of the session key, each said encryption corresponding to a respective receiving location on said network; and (ii) utilising said session key to encrypt symmetrically a message; and, at each said receiving location on said network: (i) decrypting the encryption of said plurality of encryptions which corresponds to that receiving location to provide said session key; and (ii) utilising the session key to decrypt the message, said step (i) carried out at the sending location comprising: generating a first random number; deriving said session key from said first random number; utilising said first random number to generate a second random number; and utilising the first keys of asymmetric encryption key pairs of the intended recipients at the receiving locations together with said second random number and said first random number to generate said plurality of asymmetric encryptions of the session key, said step (i) carried out at each receiving location comprising: utilising the second key of the asymmetric encryption key pair of the recipient at the receiving location together with the asymmetric encryption corresponding to the receiving location to recover said first random number; and deriving said session key from said first random number.

According to a fourth aspect of the present invention there is provided a secure communication method comprising: at a sending location on a communications network providing a plurality of asymmetric encryptions of a message, each said encryption corresponding to a respective receiving location on said network, said step of providing said plurality of asymmetric encryptions comprising: deriving from said message a first random number; and utilising the first keys of asymmetric encryption key pairs of the intended recipients at the receiving locations together with said first random number and said message to generate said plurality of asymmetric encryptions of the message; and, at each said receiving location on said network decrypting the encryption of said plurality of encryptions which corresponds to that receiving location to provide said message, said step of decrypting comprising utilising the second key of the asymmetric encryption key pair of the recipient at the receiving location together with the asymmetric encryption corresponding to the receiving location to recover the message.

The invention will now be described, by way of example, with reference to the accompanying drawings, in which:
Fig 1 is a block schematic diagram of a secure communication system;
Fig 2 is a block schematic diagram of an encapsulator of the system of Fig 1, which encapsulator is not in accordance with the present invention but is useful for understanding the present invention;
Fig 3 is a block schematic diagram of a decapsulator of the system of Fig 1, which decapsulator is not in accordance with the present invention but is useful for understanding the present invention;
Figs 4 and 5 illustrate an alternative encapsulator/decapsulator combination to that of Figs 2 and 3, which alternative encapsulator/decapsulator combination is in accordance with the present invention; and
Figs 6, 7 and 8 illustrate a modification to the secure communication systems of Figs 1 to 3, and Figs 1, 4 and 5, which modification is in accordance with the present invention.

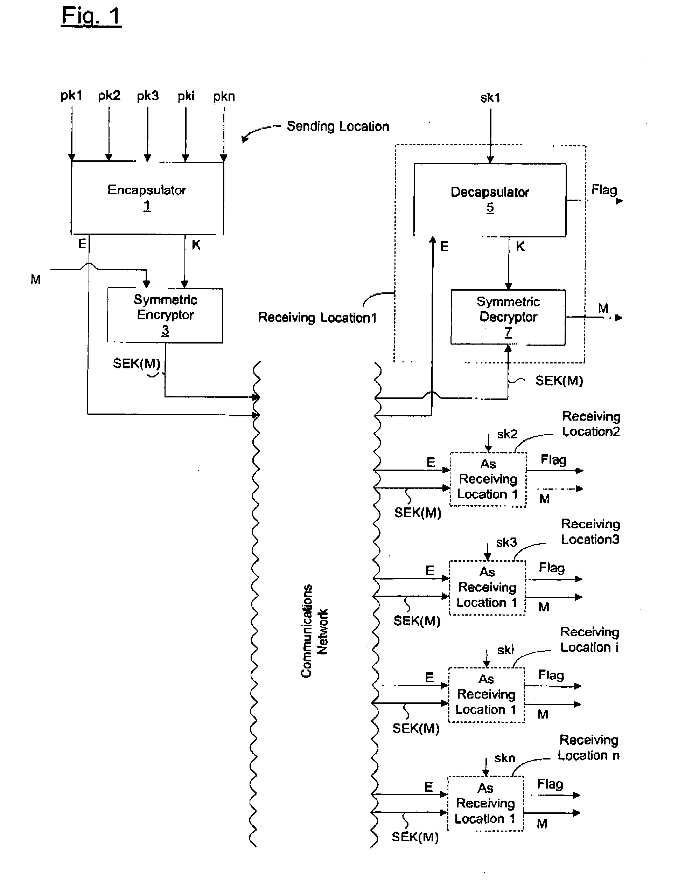

Referring to Fig 1, the communication system comprises: a communications network; at a sending location on the network, an encapsulator 1 and a symmetric encryptor 3; and, at each of a plurality of receiving locations 1, 2, 3 .., i ... n on the network, a decapsulator 5 and a symmetric decryptor 7.

A user located at the sending location wishes to send a message M (the same message) to each of the users located at receiving locations 1 to n. Each of the users at receiving locations 1 to n possesses a personal public/private key pair assigned as part of a public key cryptography communication scheme. The public/private keys assigned to the user located at receiving location 1 will be denoted pk1/sk1 respectively, the public/private keys assigned to the user located at receiving location 2 will be denoted pk2/sk2 respectively, etc.

At the sending location, public keys pk1, pk2, pk3 ... pki ... pkn are supplied to encapsulator 1, which utilises the keys to provide respective encryptions of a session key K, i.e. encapsulator 1 provides an encryption of session key K utilising public key pk1, an encryption of session key K utilising public key pk2, etc. The encryption of K utilising pk1 will be denoted E1(K), the encryption of K utilising pk2 will be denoted E2(K), etc. Thus, encapsulator 1 provides E = E1(K), E2(K), E3(K) ... Ei(K) ... En(K). Encapsulator 1 also provides session key K in unencrypted form.

The message M to be sent is supplied to symmetric encryptor 3. Symmetric encryptor 3 utilises the session key K in unencrypted form provided by encapsulator 1 to symmetrically encrypt message M. The symmetric encryption of M utilising K will be denoted SEK(M).

By means of the communications network, the sending location transmits E = E1(K), E2(K), E3(K) ... Ei(K) ... En(K), and SEK(M) to each of receiving locations 1 to n.

At receiving location 1, the private key sk1 of the user at that location is supplied to decapsulator 5. Decapsulator 5 is also in receipt of transmitted E, and uses sk1 to decrypt that part of E encrypted using the public key pk1 corresponding to sk1, i.e. decapsulator 5 uses sk1 to decrypt E1(K) to provide session key K. Decapsulator 5 also provides a Flag to specify whether the decryption was successful. Session key K is supplied to symmetric decryptor 7. Symmetric decryptor 7 is also in receipt of transmitted SEK(M), and uses K to decrypt SEK(M) to recover message M.

Each of receiving locations 2 to n operates in the same manner as receiving location 1 to recover the message M for the user at the location. Thus: the decapsulator at receiving location 2 uses sk2 to decrypt E2(K) to provide K, which in turn is used by the symmetric decryptor at location 2 to decrypt SEK(M) to recover M; receiving location 3 uses sk3 to decrypt E3(K) to provide K, which is used to decrypt SEK(M) to recover M; etc.

It will be noted that the system of Fig 1 requires only one symmetric encryption of the message to be sent, i.e. one and the same symmetric encryption of the message is sent to all receiving locations (SEK(M) is sent to all receiving locations).

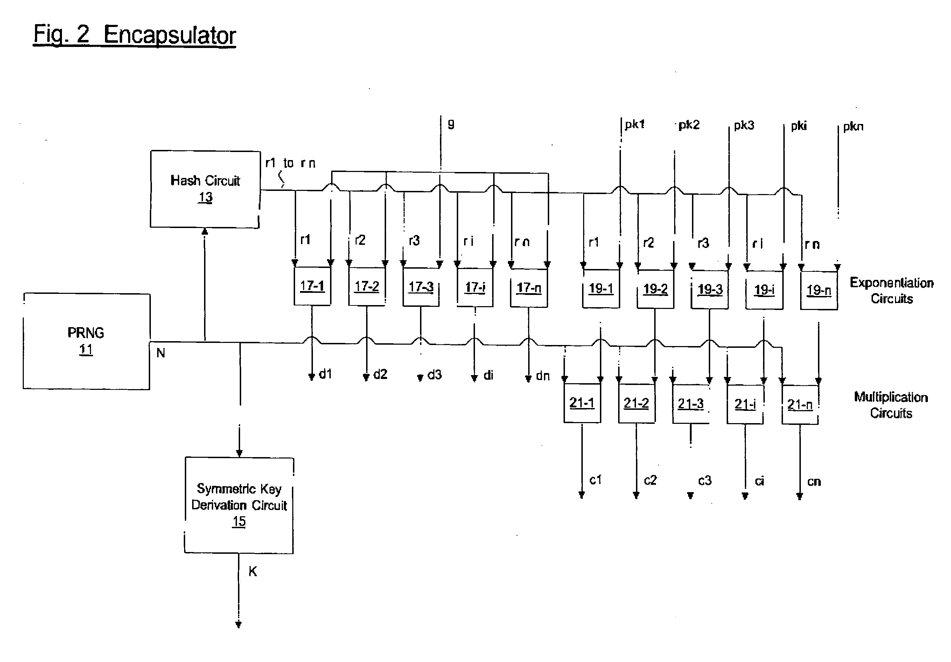

Referring to Fig 2, encapsulator 1 of Fig 1 comprises a pseudo random number generator (PRNG) 11, a hash circuit 13, a symmetric key derivation circuit 15, a first series of exponentiation circuits 17-1 to 17-n, a second series of exponentiation circuits 19-1 to 19-n, and a series of multiplication circuits 21-1 to 21-n.

PRNG 11 generates a pseudo random number N which is used: (i) by hash circuit 13 to generate a series of random numbers r1, r2, r3 ... ri ...rn; and (ii) by symmetric key derivation circuit 15 to derive symmetric key K. As shown in Fig 1, symmetric key K is supplied to symmetric encryptor 3. Random number r1 is supplied to exponentiation circuits 17-1 and 19-1, random number r2 is supplied to exponentiation circuits 17-2 and 19-2, etc. Random number N is supplied to each of multiplication circuits 21-1 to 21-n.

In addition to being supplied with a random number ri: (i) each of the first series of exponentiation circuits 17-1 to 17-n is supplied with a fixed system parameter g (g generates the required group, which could, for example, be a multiplicative group of a finite field or an elliptic curve); and (ii) each of the second series of exponentiation circuits 19-1 to 19-n is supplied with a respective public key pk1 to pkn, i.e. pk1 is supplied to circuit 19-1, pk2 is supplied to circuit 19-2, etc. Each of the first series of exponentiation circuits 17-1 to 17-n raises g to the power of the ri supplied to the circuit to provide di, i.e. circuit 17-1 raises g to the power of r1 to provide d1 = g^r1, circuit 17-2 raises g to the power of r2 to provide d2 = g^r2, etc. Each of the second series of exponentiation circuits 19-1 to 19-n raises the pki supplied to it by the ri supplied to it, i.e. circuit 19-1 raises pk1 to the power of r1 to provide pkl^rl, circuit 19-2 raises pk2 to the power of r2 to provide pk2^r2, etc. The output of exponentiation circuit 19-1 is supplied to multiplication circuit 21-1, the output of exponentiation circuit 19-2 is supplied to multiplication circuit 21-2, etc.

Multiplication circuit 21-1 multiplies the N supplied to it by the output of exponentiation circuit 19-1 to provide c1 = N.(pk1^r1), multiplication circuit 21-2 multiplies the N supplied to it by the output of exponentiation circuit 19-2 to provide c2 = N.(pk2^r2), etc.

The outputs c1 and d1 taken together constitute E1(K), the outputs c2 and d2 taken together constitute E2(K), etc.

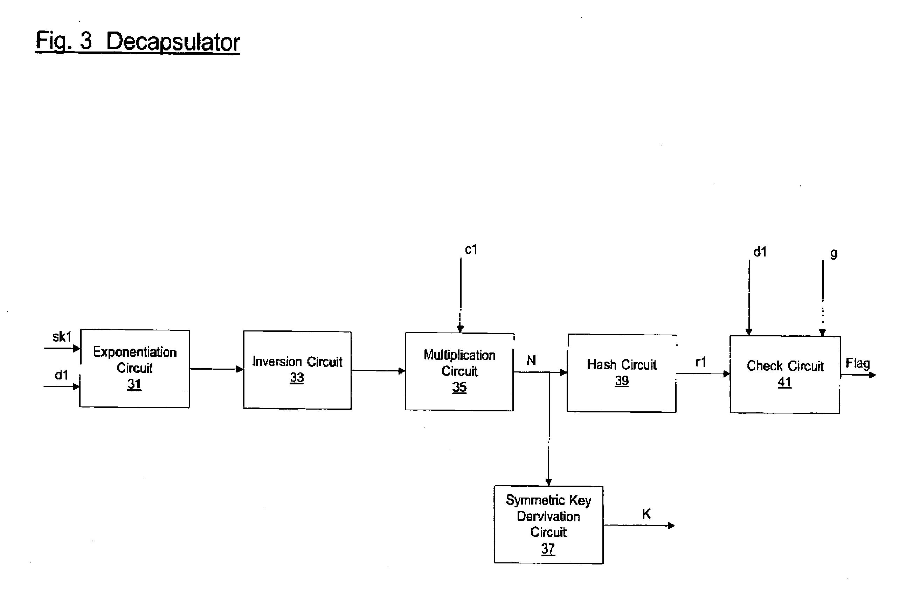

Referring to Fig 3, decapsulator 5 of Fig 1 comprises an exponentiation circuit 31, an inversion circuit 33, a multiplication circuit 35, a symmetric key derivation circuit 37, a hash circuit 39, and a check circuit 41.

Decapsulator 5 utilises sk1 to decrypt E1(K) (constituted by c1 and d1) to provide session key K. Decapsulator 5 also provides a Flag to specify whether the decryption was successful.

Exponentiation circuit 31 raises d1 to the power of sk1, i.e. circuit 31 provides d1^sk1. Inversion circuit 33 provides 1/(d1^sk1). Multiplication circuit 35 multiplies 1/(d1^sk1) by c1 to provide cl/(d1^sk1). Now, c1 = N.(pk1^r1), and d1 = g^r1, see earlier. Substituting gives the output of circuit 35 as N.(pk1^r1)/g^(r1.sk1). Now, from public key cryptography, pk1 = g^sk1. Substituting gives the output of circuit 35 as N.(g^(r1.sk1))/g^(r1.sk1) = N. N is supplied to symmetric key derivation circuit 37, which circuit is the same as circuit 15 in Fig 2. This provides the recovered session key K. N is also supplied to hash circuit 39, which circuit is the same as circuit 13 of Fig 2. Check circuit 41 raises g to the power of r1 as provided by circuit 39, i.e. circuit 41 provides g^r1. Now, d1 = g^r1, see earlier. Check circuit 41 compares the calculated g^r1 with d1 supplied to circuit 41. If they are the same, decryption was successful, otherwise it was not.

The operation of the decapsulators of receiving locations 2 to n of Fig 1 is precisely analogous to that of decapsulator 5 of receiving location 1.

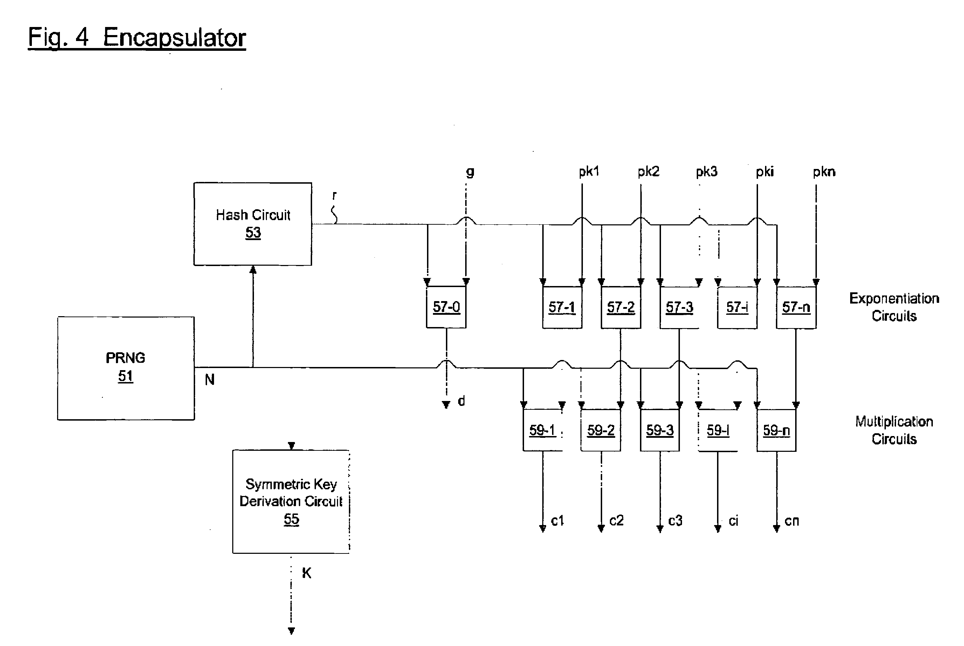

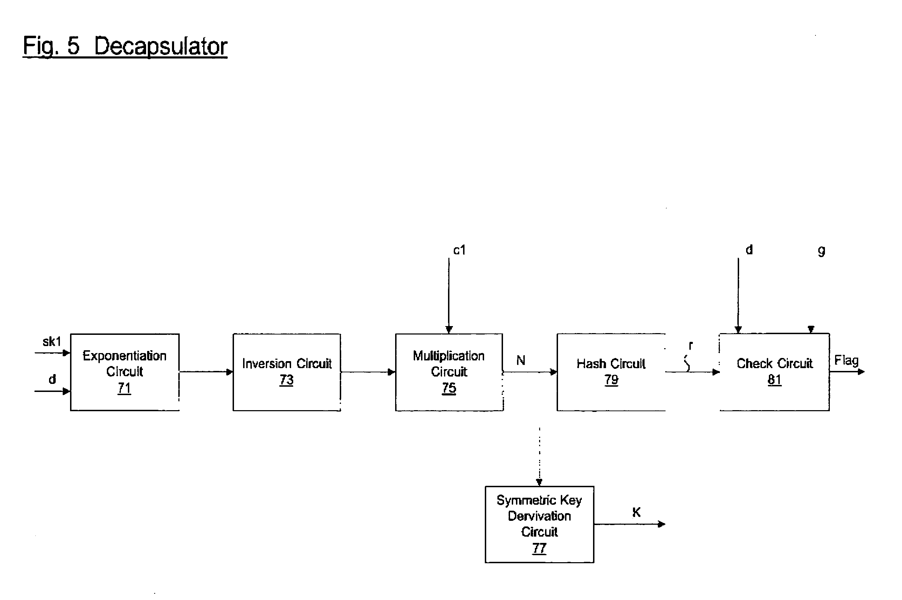

The encapsulator/decapsulator combination of Figs 4 and 5 is based on the so called ElGamal encryption scheme.

The encapsulator of Fig 4 comprises a PRNG 51, a hash circuit 53, a symmetric key derivation circuit 55, a series of exponentiation circuits 57-0 to 57-n, and a series of multiplication circuits 59-1 to 59-n.

PRNG 51 generates a pseudo random number N which is used: (i) by hash circuit 53 to generate a single random number r; and (ii) by symmetric key derivation circuit 55 to derive symmetric key K. As shown in Fig 1, symmetric key K is supplied to symmetric encryptor 3. Random number r is supplied to each of exponentiation circuits 57-0 to 57-n. Random number N is supplied to each of multiplication circuits 59-1 to 59-n.

In addition to being supplied with random number r: (i) exponentiation circuit 57-0 is supplied with a fixed system parameter g; and (ii) each of exponentiation circuits 57-1 to 57-n is supplied with a respective public key pk1 to pkn, i.e. pk1 is supplied to circuit 57-1, pk2 is supplied to circuit 57-2, etc. Exponentiation circuit 57-0 raises g to the power of r to provide d = g^r. Each of exponentiation circuits 57-1 to 57-n raises the pki supplied to it by r, i.e. circuit 57-1 raises pk1 to the power of r to provide pkl^r, circuit 57-2 raises pk2 to the power of r to provide pk2^r, etc. The output of exponentiation circuit 57-1 is supplied to multiplication circuit 59-1, the output of exponentiation circuit 57-2 is supplied to multiplication circuit 59-2, etc.

Multiplication circuit 59-1 multiplies the N supplied to it by the output of exponentiation circuit 57-1 to provide c1 = N.(pk1^r), multiplication circuit 59-2 multiplies the N supplied to it by the output of exponentiation circuit 57-2 to provide c2 = N.(pk2^r), etc.

The outputs c1 and d taken together constitute E1(K), the outputs c2 and d taken together constitute E2(K), etc.

The decapsulator of Fig 5 comprises an exponentiation circuit 71, an inversion circuit 73, a multiplication circuit 75, a symmetric key derivation circuit 77, a hash circuit 79, and a check circuit 81.

The decapsulator utilises sk1 to decrypt E1(K) (constituted by c1 and d) to provide session key K. The decapsulator also provides a Flag to specify whether the decryption was successful.

Exponentiation circuit 71 raises d to the power of sk1, i.e. circuit 71 provides d^sk1. Inversion circuit 73 provides 1/(d^skl). Multiplication circuit 75 multiplies 1/(d^skl) by c1 to provide ci/(d^skl). Now, c1 = N.(pkl^r), and d = g^r, see earlier. Substituting gives the output of circuit 75 as N.(pkl^r)/g^(r.skl). Now, from public key cryptography, pk1 = g^sk1. Substituting gives the output of circuit 75 as N.(g^(r.sk1))/g^(r.sk1) = N. N is supplied to symmetric key derivation circuit 77, which circuit is the same as circuit 55 in Fig 4. This provides the recovered session key K. N is also supplied to hash circuit 79, which circuit is the same as circuit 53 of Fig 4. Check circuit 81 raises g to the power of r as provided by circuit 79, i.e. circuit 81 provides g^r. Now, d = g^r, see earlier. Check circuit 81 compares the calculated g^r with d supplied to circuit 81. If they are the same, decryption was successful, otherwise it was not.

The operation of the decapsulators of receiving locations 2 to n of Fig 1 is precisely analogous to that of the decapsulator of receiving location 1 shown in Fig 5.

It will be seen that the encapsulator/decapsulator combination of Figs 4 and 5 is far more efficient than the encapsulator/decapsulator combination of Figs 2 and 3. In particular, the combination of Figs 2 and 3 requires series of random numbers r1 to m (one random number in respect of each intended recipient), whereas the combination of Figs 4 and 5 requires only one random number r (used for all recipients). The encapsulator of Fig 2 provides the encryptions E1(K) to En(K) utilising public keys pk1 to pkn, random number N, and random numbers r1 to m (derived from N). The encapsulator of Fig 4 provides the encryptions E1(K) to En(K) utilising public keys pk1 to pkn, random number N, and single random number r (derived from N).

If the amount of data to be sent is relatively low, the encapsulator/decapsulator combination of Figs 4 and 5 can be used without the need for symmetric encryption by a separate symmetric encryptor as symmetric encryptor 3 of Fig 1. In such case, referring to Fig 4: (i) PRNG 51 and symmetric key derivation circuit 55 would be dispensed with; and (ii) the message to be sent M would replace N, i.e. M instead ofN would be supplied to hash circuit 53 and each of multiplication circuits 59-1 to 59-n. Referring to Fig 5: (i) symmetric key derivation circuit 77 would be dispensed with; and (ii) M instead of N would be recovered by multiplication circuit 75. If this encryption/decryption scheme is used, then, for security, it should be combined with the Fujisaki-Okamoto transform, or similar defence against attack. For the Fujisaki-Okamoto transform, see E. Fujisaki and T. Okamoto, Secure integration of asymmetric and symmetric encryption schemes, Advances in Cryptology - CRYPTO 1999, Springer-Verlag LNCS 1666, 537-554, 1999.

In the above secure communication systems of Figs 1 to 3, and Figs 1, 4 and 5, the encapsulator is supplied with the public keys of the intended recipients (each intended recipient possesses a personal public/private key pair assigned as part of a public key cryptography communication scheme). This requires knowledge on the part of the sending party of the public keys of all the intended recipients. There will now be described a modification to the above systems, which modification avoids the requirement to have knowledge of the public keys of the intended recipients. In the modification, so called identity based keys id1, id2, id3 ... idi ... idn must be supplied to the encapsulator. An identity based key idi could, for example, be based on an intended recipient's email address, name or phone number.

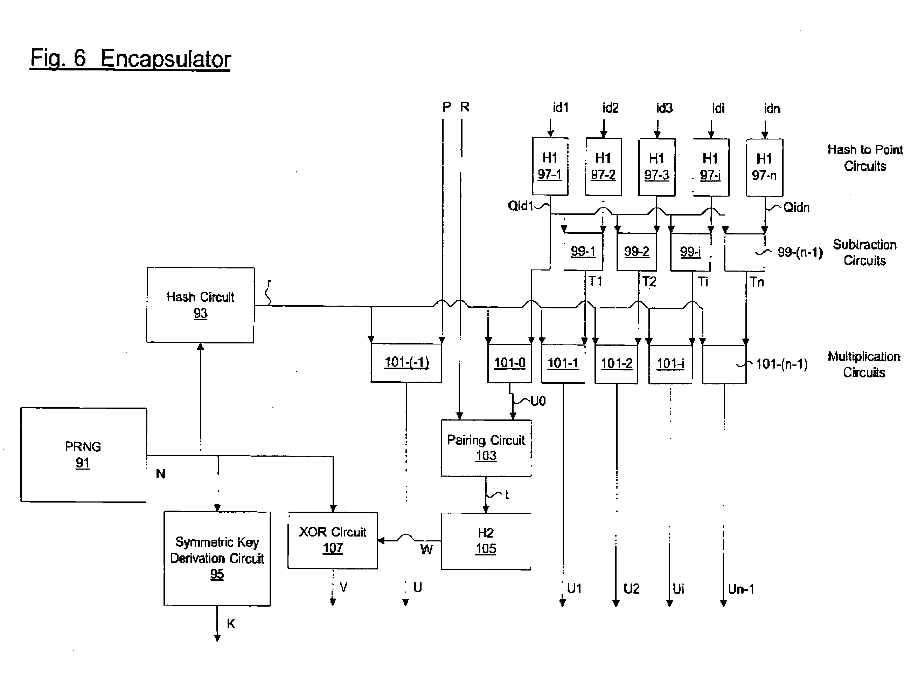

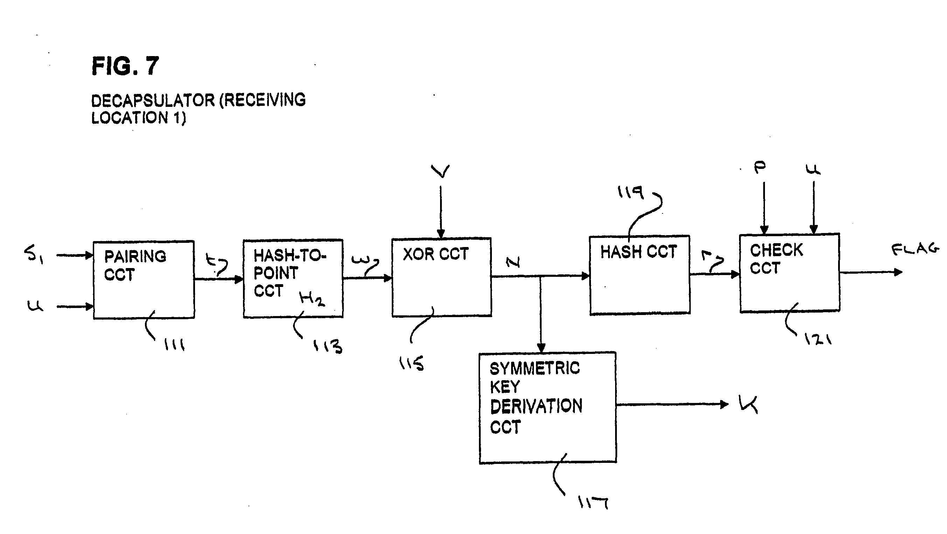

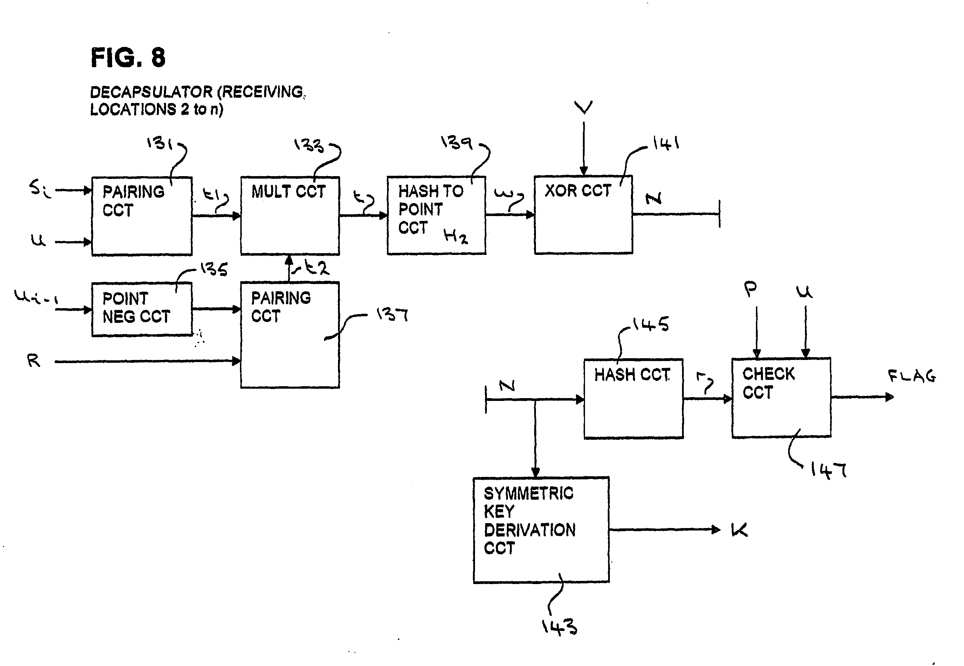

Figs 6, 7 and 8 illustrate an encapsulator/decapsulator combination. This combination is based on the so called Boneh-Franklin encryption scheme, see D. Boneh and M. Franklin, Identity based encryption from the Weil pairing, Advances in Cryptology - CRYPTO 2001, Springer-Verlag LNCS 2139, 213-229, 2001. Fig 6 illustrates the encapsulator located at the sending location. Fig 7 illustrates the decapsulator located a receiving location 1 only. Fig 8 illustrates the decapsulator located at each of receiving locations 2 to n.

The encapsulator of Fig 6 comprises a PRNG 91, a hash circuit 93, a symmetric key derivation circuit 95, a series of first hash-to-point circuits 97-1 to 97-n, a series of subtraction circuits 99-1 to 99-(n-1), a series of multiplication circuits 101-(-1) to 101-(n-1), a pairing circuit 103, a second hash-to-point circuit 105, and an exclusive-OR (XOR) circuit 107.

PRNG 91 generates a pseudo random number N which is used: (i) by hash circuit 93 to generate a single random number r; and (ii) by symmetric key derivation circuit 95 to derive symmetric key K. As shown in Fig 1, symmetric key K is supplied to symmetric encryptor 3. Random number r is supplied to each of multiplication circuits 101-(-1) to 101-(n-1). Random number N is supplied to XOR circuit 107.

Each of first hash-to-point circuits 97-1 to 97-n is supplied with a respective identity key id1 to idn, i.e. id1 is supplied to circuit 97-1, id2 is supplied to circuit 97-2, etc. Hash-to-point circuit 97-1 implements a first hash-to-point algorithm H1 to provide Qid1, hash-to-point circuit 97-2 implements the same first hash-to-point algorithm H1 to provide Qid2, etc. Qid1 is supplied to multiplication circuit 101-0, and each of subtraction circuits 99-1 to 99-(n-1). Qid2 is supplied to subtraction circuit 99-1, Qid3 is supplied to subtraction circuit 99-2, etc.

Utilising Qid1 and Qid2, subtraction circuit 99-1 implements a subtraction algorithm SUB to provide T1, utilizing Qid1 and Qid3, subtraction circuit 99-2 implements the same subtraction algorithm SUB to provide T2, etc. T1 is supplied to multiplication circuit 101-1, T2 is supplied to multiplication circuit 101-2, etc.

Utilising r and P (a fixed system parameter which generates the required group), multiplication circuit 101-(-1) implements a multiplication algorithm MULT to provide U. Utilising r and Qid1, multiplication circuit 101-0 implements the same multiplication algorithm MULT to provide U0. Utilising r and T1, multiplication circuit 101-1 implements MULT to provide U1, utilising r and T2, multiplication circuit 101-2 implements MULT to provide U2, etc.

Utilising R (the public key of the trust authority providing the secure communication scheme) and U0, pairing circuit 103 implements a pairing algorithm PAIR to provide t to second hash-to-point circuit 105. Second hash-to-point circuit 105 implements a second hash-to-point algorithm H2 to provide W to XOR circuit 107. XOR circuit 107 XORs N and W to provide V (the XOR of circuit 107 could be replaced by any arbitrary symmetric encryption function).

The outputs U and V taken together constitute E1(K) as transmitted by the sending location in Fig 1. The outputs U1, U and V taken together constitute E2(K) as transmitted by the sending location in Fig 1, the outputs U2, U and V taken together constitute E3(K) as transmitted by the sending location in Fig 1, the outputs U3, U and V taken together constitute E4(K) as transmitted by the sending location in Fig 1, etc.

The decapsulator of Fig 7 comprises a pairing circuit 111, a hash-to-point circuit 113, an XOR circuit 115, a symmetric key derivation circuit 117, a hash circuit 119, and a check circuit 121.

The decapsulator utilises the secret key S1 (assigned by the trust authority) of the user at location 1 to decrypt E1(K) (constituted by U and V) to provide session key K. The decapsulator also provides a Flag to specify whether the decryption was successful.

Utilising S1 and U, pairing circuit 111 implements pairing algorithm PAIR (the same pairing algorithm as implemented by pairing circuit 103 of Fig 6) to provide t to hash-to-point circuit 113. Hash-to-point circuit 113 implements second hash-to-point algorithm H2 (the same hash-to-point algorithm as implemented by second hash-to-point circuit 105 of Fig 6) to provide W to XOR circuit 115. XOR circuit 115 XORs W and V to provide N. N is supplied to symmetric key derivation circuit 117, which circuit is the same as circuit 95 of Fig 6. This provides the recovered session key K. N is also supplied to hash circuit 119, which circuit is the same as circuit 93 of Fig 6. This provides r. Utilising r and P, check circuit 121 implements multiplication algorithm MULT (the same multiplication algorithm as implemented by multiplication circuit 101-(-1) of Fig 6). Now, in Fig 6, multiplication circuit 101-(-1), utilising r and P, provides U. Check circuit 121 compares the result of its implementation of MULT with U supplied to circuit 121. If they are the same, decryption was successful, otherwise it was not.

The decapsulator of Fig 8 comprises a first pairing circuit 131, a multiplication circuit 133, a point negation circuit 135, a second pairing circuit 137, a hash-to-point circuit 139, an XOR circuit 141, a symmetric key derivation circuit 143, a hash circuit 145, and a check circuit 147.

The decapsulator utilises the secret key Si (1 < i ≤ n) of the user at location i to decrypt Ei(K) (constituted by U(i-I), U and V) to provide session key K. The decapsulator also provides a Flag to specify whether the decryption was successful.

Utilising Si and U, first pairing circuit 131 implements pairing algorithm PAIR (the same pairing algorithm as implemented by pairing circuit 103 of Fig 6) to provide t1 to multiplication circuit 133. Utilising U(i-1) (supplied via point negation circuit 135 which implements a point negation algorithm) and R, second pairing circuit 137 also implements pairing algorithm PAIR to provide t2 to multiplication circuit 133. Multiplication circuit 133 implements multiplication algorithm MULT (the same multiplication algorithm as implemented by multiplication circuits 101-(-1) to 101-(n-1) of Fig 6) to provide t to hash-to-point circuit 139. Hash-to-point circuit 139 implements second hash-to-point algorithm H2 (the same hash-to-point algorithm as implemented by second hash-to-point circuit 105 of Fig 6) to provide W to XOR circuit 141. XOR circuit 141 XORs W and V to provide N. N is supplied to symmetric key derivation circuit 143, which circuit is the same as circuit 95 of Fig 6. This provides the recovered session key K. N is also supplied to hash circuit 145, which circuit is the same as circuit 93 of Fig 6. This provides r. Utilising r and P, check circuit 147 implements multiplication algorithm MULT (the same multiplication algorithm as implemented by multiplication circuit 101-(-1) of Fig 6). Now, in Fig 6, multiplication circuit 101-(-1), utilising r and P, provides U. Check circuit 147 compares the result of its implementation of MULT with U supplied to circuit 147. If they are the same, decryption was successful, otherwise it was not.

It will be seen that the encapsulator/decapsulator combination of Figs 6, 7 and 8 is again efficient in that it requires only one random number r (used for all recipients). The encapsulator of Fig 6 provides the encryptions E1(K) to En(K) utilising identity keys id1 to idn, random number N, and single random number r (derived from N).

If the amount of data to be sent is relatively low, the encapsulator/decapsulator combination of Figs 6, 7 and 8 can be used without the need for symmetric encryption by a separate symmetric encryptor as symmetric encryptor 3 of Fig 1. In such case, referring to Fig 6: (i) PRNG 91 and symmetric key derivation circuit 95 would be dispensed with; and (ii) the message to be sent M would replace N, i.e. M instead of N would be supplied to hash circuit 93 and XOR circuit 107. Referring to Fig 7: (i) symmetric key derivation circuit 117 would be dispensed with; and (ii) M instead of N would be recovered by XOR circuit 115. Referring to Fig 8: (i) symmetric key derivation circuit 143 would be dispensed with; and (ii) M instead of N would be recovered by XOR circuit 141. If this encryption/decryption scheme is used, then, for security, it should be combined with the Fujisaki-Okamoto transform, or similar defence against attack.

Although the above description concerns two types of asymmetric cryptography, public key and identity based, it is to be appreciated that the present invention is not so limited, and applies also to other types of asymmetric cryptography. Further aspects are enumerated in the following numbered clauses.

### Clauses:

1. A secure communication system comprising: a communications network; at a sending location on said network: (i) an encapsulator (1) for providing (a) a session key (K), and (b) a plurality of asymmetric encryptions of the session key (E1(K), E2(K), E3(K) ... Ei(K) ... En(K)), each said encryption corresponding to a respective receiving location (1 to n) on said network; and (ii) a symmetric encryptor (3) for utilising said session key (K) to encrypt a message (M); and, at each said receiving location (1 to n) on said network: (i) a decapsulator (5) for decrypting the encryption of said plurality of encryptions (E1(K), E2(K), E3(K) ... Ei(K) ... En(K)) which corresponds to that receiving location (1 to n) to provide said session key (K); and (ii) a symmetric decryptor (7) for utilising the session key (K) to decrypt the message (M), said encapsulator (1) comprising: a pseudo random number generator (51 or 91); symmetric key derivation means (55 or 95) for deriving said session key (K) from a first random number (N) generated by said pseudo random number generator (51 or 91); means (53 or 93) for utilising said first random number (N) to generate a second random number (r); and means (57-0 to 57-n and 59-1 to 59-n, or 97-1 to 97-n and 99-1 to 99-(n-1) and 101-(-1) to 101-(n-1) and 103 and 105 and 107) for utilising the first keys (pk1 to pkn, or id1 to idn) of asymmetric encryption key pairs (pk1 to pkn and sk1 to skn, or id1 to idn and S1 to Sn) of the intended recipients at the receiving locations (1 to n) together with said second random number (r) and said first random number (N) to generate said plurality of asymmetric encryptions of the session key (E1(K), E2(K), E3(K) ... Ei(K) ... En(K)), said decapsulator (5) at each receiving location (1 to n) comprising: means (71, 73, 75, or 111, 113, 115 or 131, 133, 135, 137, 139, 141) for utilising the second key (ski or Si) of the asymmetric encryption key pair (pki and ski, or idi and Si) of the recipient at the receiving location together with the asymmetric encryption (Ei(K)) corresponding to the receiving location to recover said first random number (N); and a further symmetric key derivation means (77, or 117 or 143) for deriving said session key (K) from said first random number (N).
2. A secure communication system comprising: a communications network; at a sending location on said network an encryptor (1) for providing a plurality of asymmetric encryptions of a message (M), each said encryption corresponding to a respective receiving location (1 to n) on said network, said encryptor comprising: means (53 or 93) for deriving from said message (M) a first random number (r); and means (57-0 to 57-n and 59-1 to 59-n, or 97-1 to 97-n and 99-1 to 99-(n-1) and 101-(-1) to 101-(n-1) and 103 and 105 and 107) for utilising the first keys (pk1 to pkn, or id1 to idn) of asymmetric encryption key pairs (pk1 to pkn and sk1 to skn, or id1 to idn and S1 to Sn) of the intended recipients at the receiving locations (1 to n) together with said first random number (r) and said message (M) to generate said plurality of asymmetric encryptions of the message; and, at each said receiving location (1 to n) on said network a decryptor (5) for decrypting the encryption of said plurality of encryptions which corresponds to that receiving location (1 to n) to provide said message (M), said decryptor (5) comprising means (71, 73, 75, or 111, 113, 115 or 131, 133, 135, 137, 139, 141) for utilising the second key (ski or Si) of the asymmetric encryption key pair (pki and ski, or idi and Si) of the recipient at the receiving location together with the asymmetric encryption corresponding to the receiving location to recover the message (M).
3. A system according to clause 2 wherein: said first and second keys (pk1 to pkn, sk1 to skn) comprise public and private keys (pk1 to pkn, sk1 to skn) assigned to the recipients as part of a public key cryptography communication scheme; said means (57-0 to 57-n, 59-1 to 59-n) for utilising the public keys (pk1 to pkn) comprises: a series of first exponentiation means (57-0 to 57-n), one of said first exponentiation means (57-0) raising a fixed system parameter (g) to the power of said first random number (r) to provide a first output (d), each of the remainder of said first exponentiation means (57-1 to 57-n) raising a respective public key (pk1 to pkn) to the power of said first random number (r) to provide a second output (pki^r); and a series of first multiplication means (59-1 to 59-n), each first multiplication means (59-1 to 59-n) multiplying a respective said second output (pki^r) by said message (M) to provide a third output (ci), said third outputs (ci) of said first multiplication means (59-1 to 59-n) together with said first output (d) of said one of said first exponentiation means (57-0) constituting said plurality of asymmetric encryptions of the message (M); and said means (71, 73, 75) for utilising the private key (ski) comprises: second exponentiation means (71) for raising said first output (d) to the power of the private key (ski); inversion means (73) for inverting the output (d^ski) of said second exponentiation means (71); and a second multiplication means (75) for multiplying the output (1/(d^ski)) of said inversion means (73) by the said third output (ci) corresponding to the receiving location (1 to n), said second multiplication means (75) thereby recovering the message (M).
4. A system according to clause 2 wherein: said first keys (id1 to idn) comprise identity keys (id1 to idn) based on the identities of the recipients, and said second keys (S1 to Sn) comprise corresponding secret keys (S1 to Sn) assigned to the recipients as part of an identity based cryptography communication scheme; said means (97-1 to 97-n, 99-1 to 99-(n-1), 101-(-1) to 101-(n-1), 103, 105, 107) for utilising the identity keys (id1 to idn) comprises: a series of first hash-to-point means (97-1 to 97-n), one of said first hash-to-point means (97-1) utilising one of the identity keys (id1) to implement a first hash-to-point algorithm (H1) to provide a first output (Qid1), each remaining said first hash-to-point means (97-2 to 97-n) utilising a respective remaining identity key (id2 to idn) to implement said first hash-to-point algorithm (H1) to provide a second output (Qid2 to Qidn); a series of subtraction means (99-1 to 99-(n-1)), each said subtraction means (99-1 to 99-(n-1)) utilising said first output (Qid1) together with a respective said second output (Qid2 to Qidn) to implement a subtraction algorithm (SUB) to provide a third output (T1 to Tn); a series of first multiplication means (101-(-1) to 101-(n-1)), one of said first multiplication means (101-(-1)) utilising said first random number (r) and a fixed system parameter (P) to implement a multiplication algorithm (MULT) to provide a fourth output (U), another of said first multiplication means (101-0) utilising said first random number (r) and said first output (Qid1) to implement said multiplication algorithm (MULT) to provide a fifth output (U0), each remaining said first multiplication means (101-1 to 101-(n-1)) utilising said first random number (r) together with a respective said third output (T1 to Tn) to implement said multiplication algorithm (MULT) to provide a sixth output (U1 to U(n-1)); first pairing means (103) for utilising a publicly available key (R) together with said fifth output (U0) to implement a pairing algorithm (PAIR) to provide a seventh output (t); second hash-to-point means (105) for utilising said seventh output (t) to implement a second hash-to-point algorithm (H2) to provide an eighth output (W); and symmetric encryption means (107) for utilising said message (M) together with said eighth output (W) to implement a symmetric encryption function to provide a ninth output (V), said fourth, sixth and ninth outputs (U, U1 to U(n-1), V) together constituting said plurality of asymmetric encryptions of the message (M); and said means (111, 113, 115 or 131, 133, 135, 137, 139, 141) for utilising the secret key (Si) comprises: at one receiving location (1) of said receiving locations (1 to n): second pairing means (111) for utilising the secret key (S1) of the recipient at the receiving location (1) together with said fourth output (U) to implement said pairing algorithm (PAIR) to provide a tenth output (t); third hash-to-point means (113) for utilising said tenth output (t) to implement said second hash-to-point algorithm (H2) to provide an eleventh output (W); and symmetric decryption means (115) for utilising said eleventh output (W) together with said ninth output (V) to implement a symmetric decryption function corresponding to said symmetric encryption function to recover said message (M); and at each remaining receiving location (2 to n): third pairing means (131) for utilising the secret key (Si (1 < i ≤ n)) of the recipient at the receiving location (2 to n) together with said fourth output (U) to implement said pairing algorithm (PAIR) to provide a twelfth output (t1); point negation means (135) for utilising the said sixth output (U1 to U(n-1)) corresponding to the receiving location (2 to n) to implement a point negation algorithm to provide a thirteenth output; fourth pairing means (137) for utilising said thirteenth output together with said publicly available key (R) to implement said pairing algorithm (PAIR) to provide a fourteenth output (t2); second multiplication means (133) for utilising said twelfth and fourteenth outputs (t1, t2) to implement said multiplication algorithm (MULT) to provide a fifteenth output (t); fourth hash-to-point means (139) for utilising said fifteenth output (t) to implement said second hash-to-point algorithm (H2) to provide a sixteenth output (W); and further symmetric decryption means (141) for utilising said sixteenth output (W) together with said ninth output (V) to implement a symmetric decryption function corresponding to said symmetric encryption function to recover said message (M).
5. A secure communication method comprising: at a sending location on a communications network: (i) providing (a) a session key (K), and (b) a plurality of asymmetric encryptions of the session key (E1(K), E2(K), E3(K) ... Ei(K) ... En(K)), each said encryption corresponding to a respective receiving location (1 to n) on said network; and (ii) utilising said session key (K) to encrypt symmetrically a message (M); and, at each said receiving location (1 to n) on said network: (i) decrypting the encryption of said plurality of encryptions (E1(K), E2(K), E3(K) ... Ei(K) ... En(K)) which corresponds to that receiving location (1 to n) to provide said session key (K); and (ii) utilising the session key (K) to decrypt the message (M), said step (i) carried out at the sending location comprising: generating a first random number (N); deriving said session key (K) from said first random number (N); utilising said first random number (N) to generate a second random number (r); and utilising the first keys (pk1 to pkn, or id1 to idn) of asymmetric encryption key pairs (pk1 to pkn and sk1 to skn, or id1 to idn and S1 to Sn) of the intended recipients at the receiving locations (1 to n) together with said second random number (r) and said first random number (N) to generate said plurality of asymmetric encryptions of the session key (E1(K), E2(K), E3(K) ... Ei(K) ... En(K)), said step (i) carried out at each receiving location (1 to n) comprising: utilising the second key (ski or Si) of the asymmetric encryption key pair (pki and ski, or idi and Si) of the recipient at the receiving location together with the asymmetric encryption (Ei(K)) corresponding to the receiving location to recover said first random number (N); and deriving said session key (K) from said first random number (N).
6. A secure communication method comprising: at a sending location on a communications network providing a plurality of asymmetric encryptions of a message (M), each said encryption corresponding to a respective receiving location (1 to n) on said network, said step of providing said plurality of asymmetric encryptions comprising: deriving from said message (M) a first random number (r); and utilising the first keys (pk1 to pkn, or id1 to idn) of asymmetric encryption key pairs (pk1 to pkn and sk1 to skn, or id1 to idn and S1 to Sn) of the intended recipients at the receiving locations (1 to n) together with said first random number (r) and said message (M) to generate said plurality of asymmetric encryptions of the message; and, at each said receiving location (1 to n) on said network decrypting the encryption of said plurality of encryptions which corresponds to that receiving location (1 to n) to provide said message (M), said step of decrypting comprising utilising the second key (ski or Si) of the asymmetric encryption key pair (pki and ski, or idi and Si) of the recipient at the receiving location together with the asymmetric encryption corresponding to the receiving location to recover the message (M).
7. A method according to clause 6 wherein: said first and second keys (pk1 to pkn, sk1 to skn) comprise public and private keys (pk1 to pkn, sk1 to skn) assigned to the recipients as part of a public key cryptography communication scheme; said step of utilising the public keys (pk1 to pkn) comprises: raising a fixed system parameter (g) to the power of said first random number (r) to provide a first output (d); raising each public key (pk1 to pkn) to the power of said first random number (r) to provide a second output (pki^r); and multiplying each said second output (pki^r) by said message (M) to provide a third output (ci), said third outputs (ci) together with said first output (d) constituting said plurality of asymmetric encryptions of the message (M); and said step of utilising the private key (ski) comprises: raising said first output (d) to the power of the private key (ski) to provide a fourth output (d^ski); inverting the fourth output (d^ski) to provide a fifth output (1/(d^ski)); and multiplying the fifth output (1/(d^ski)) by the said third output (ci) corresponding to the receiving location (1 to n) to recover the message (M).
8. A method according to clause 6 wherein: said first keys (id1 to idn) comprise identity keys (id1 to idn) based on the identities of the recipients, and said second keys (S1 to Sn) comprise corresponding secret keys (S1 to Sn) assigned to the recipients as part of an identity based cryptography communication scheme; said step of utilising the identity keys (id1 to idn) comprises: utilising one of the identity keys (id1) to implement a first hash-to-point algorithm (H1) to provide a first output (Qid1); utilising each remaining identity key (id2 to idn) to implement said first hash-to-point algorithm (H1) to provide a second output (Qid2 to Qidn); utilising said first output (Qid1) together with each said second output (Qid2 to Qidn) to implement a subtraction algorithm (SUB) to provide a third output (T1 to Tn); utilising said first random number (r) and a fixed system parameter (P) to implement a multiplication algorithm (MULT) to provide a fourth output (U); utilising said first random number (r) and said first output (Qid1) to implement said multiplication algorithm (MULT) to provide a fifth output (UO); utilising said first random number (r) together with each said third output (T1 to Tn) to implement said multiplication algorithm (MULT) to provide a sixth output (U1 to U(n-1)); utilising a publicly available key (R) together with said fifth output (U0) to implement a pairing algorithm (PAIR) to provide a seventh output (t); utilising said seventh output (t) to implement a second hash-to-point algorithm (H2) to provide an eighth output (W); and utilising said message (M) together with said eighth output (W) to implement a symmetric encryption function to provide a ninth output (V), said fourth, sixth and ninth outputs (U, U1 to U(n-1), V) together constituting said plurality of asymmetric encryptions of the message (M); and said step of utilising the secret key (Si) comprises: at one receiving location (1) of said receiving locations (1 to n): utilising the secret key (S1) of the recipient at the receiving location (1) together with said fourth output (U) to implement said pairing algorithm (PAIR) to provide a tenth output (t); utilising said tenth output (t) to implement said second hash-to-point algorithm (H2) to provide an eleventh output (W); and utilising said eleventh output (W) together with said ninth output (V) to implement a symmetric decryption function corresponding to said symmetric encryption function to recover said message (M); and at each remaining receiving location (2 to n): utilising the secret key (Si (1 < i ≤ n)) of the recipient at the receiving location (2 to n) together with said fourth output (U) to implement said pairing algorithm (PAIR) to provide a twelfth output (t1); utilising the said sixth output (U1 to U(n-1)) corresponding to the receiving location (2 to n) to implement a point negation algorithm to provide a thirteenth output; utilising said thirteenth output together with said publicly available key (R) to implement said pairing algorithm (PAIR) to provide a fourteenth output (t2); utilising said twelfth and fourteenth outputs (t1, t2) to implement said multiplication algorithm (MULT) to provide a fifteenth output (t); utilising said fifteenth output (t) to implement said second hash-to-point algorithm (H2) to provide a sixteenth output (W); and utilising said sixteenth output (W) together with said ninth output (V) to implement a symmetric decryption function corresponding to said symmetric encryption function to recover said message (M).

## Claims

1. Apparatus for generating a secure message for transmission to respective locations on a network, said apparatus configured to:
encrypt a message to be transmitted to respective locations on a network with a session key (K) to form an encrypted message SEK(M); and
generate using a plurality of asymmetric keys a corresponding plurality of asymmetric encryptions (E1(K),... Ei(K)...En(K)) from which said session key (K) can be derived; and wherein
respective ones of said plurality of asymmetric keys correspond to said respective locations on a network.

2. Apparatus according to claim 1, wherein said plurality of asymmetric encryptions (E1(K),... Ei(K)...En(K)) are of a random number value from which said session key can be derived.

3. Apparatus according to claim 1 or 2, configured to derive respective ones of said asymmetric encryptions by utilising a public key (pk1,...pki,... pkn) of an asymmetric key pair for a corresponding one of said respective locations on a network.

4. Apparatus according to claim 1 or 2, further configured to derive respective ones of said asymmetric encryptions by utilising an identity-based key.

5. Apparatus according to claim 4, wherein said identity-based key is based on an intended recipient's email address, name or phone number.

6. Apparatus according to claim 4 or claim 5, further configured to implement a Boneh-Franklin encryption scheme.

7. Apparatus according to any preceding claim, configured to generate a single random number from said random number value for utilisation in deriving said asymmetric encryptions.

8. Apparatus for decrypting an encrypted message SEK(M), said apparatus configured to:
decrypt an asymmetric encryption Ei(K) with a private key (ski) corresponding to a location on a network to which said encrypted message was transmitted to derive said session key (K); and
utilise said session key to decrypt said encrypted message for deriving a message (M) from said encrypted message.

9. Apparatus according to claim 8, further configured to:
decrypt said asymmetric encryption Ei(K) with said private key (ski) to obtain a random number value from which said session key has been derived; and
utilise said random number value for deriving said session key and decrypt said encrypted message to derive a message (M) from said encrypted message.

10. Apparatus according to claim 8, configured to decrypt said asymmetric encryption with a secret key associated with an identity-based key.

11. Apparatus according to claim 10, wherein said identity-based key is based on an intended recipient's email address, name or phone number.

12. Apparatus according to any preceding claim wherein said session key (K) is a symmetric key.

13. A secure communications system, comprising a communications network and apparatus according to any preceding claim.

14. A method for generating a secure message for transmission to respective locations on a network, comprising:
encrypting a message to be transmitted to respective locations on a network with a session key (K) to form an encrypted message SEK(M); and
generating using a plurality of asymmetric keys a corresponding plurality of asymmetric encryptions (E1(K),... Ei(K)...En(K)) from which said session key (K) can be derived, wherein respective ones of said plurality of asymmetric keys correspond to respective locations on a network.

15. A method according to claim 14, wherein said plurality of asymmetric encryptions (E1(K) , ...Ei(K)... En(K)) are of a random number value from which said session key can be derived.

16. A method according to claim 14 or claim 15, further comprising deriving respective ones of said asymmetric encryptions by utilising a public key (pk1,...pki,... pkn) of an asymmetric key pair for a corresponding one of said respective locations on a network.

17. A method according to any one of claims 14 to 16, further comprising deriving respective ones of said asymmetric encryptions by utilising an identity-based key.

18. A method according to claim 17, wherein said identity-based key is based on an intended recipient's email address, name or phone number.

19. A method according to claim 17 or claim 18, further comprising implementing a Boneh-Franklin encryption scheme.

20. A method according to any one of claims 14 to 19, comprising generating a single random number from said random number value for utilisation in deriving said asymmetric encryptions.

21. A method for decrypting an encrypted message SEK(M), comprising:
decrypting an asymmetric encryption Ei(K) with a private key (ski) corresponding to a location on a network to which said encrypted message was transmitted to derive said session key (K); and
utilising said session key to decrypt said encrypted message for deriving a message (M) from said encrypted message.

22. A method according to claim 21, further comprising:
decrypting said asymmetric encryption Ei(K) with said private key (ski) to obtain a random number value from which said session key (K) has been derived; and
utilising said random number value to derive said session key and decrypt said encrypted message for deriving a message (M) from said encrypted message.

23. A method according to claim 21 or 22, comprising decrypting said asymmetric encryption with a private key associated with an identity-based key.

24. A method according to claim 23, wherein said identity-based key is based on an intended recipient's email address, name or phone number.

25. A method of secure communication over a communications medium, comprising implementing a method according to any one of claims 14 to 20 at a message transmission location of said communications medium, and implementing a method according to any one of claims 21 to 24 at two or more message recipient locations of said communications medium.
